Europäisches Patentamt

European Patent Office

Office européen des brevets

(11) Publication number: **0 013 754**
**B1**

# EUROPEAN PATENT SPECIFICATION

(45) Date of publication of patent specification: **09.11.83**

(51) Int. Cl.³: **B 29 C 17/02, B 29 C 17/03**

(21) Application number: **79105337.4**

(22) Date of filing: **21.12.79**

(54) **A method for producing thermoplastic resin molded articles.**

(30) Priority: **28.12.78 JP 163937/78**
**01.03.79 JP 24251/79**
**01.03.79 JP 24252/79**

(43) Date of publication of application:
**06.08.80 Bulletin 80/16**

(45) Publication of the grant of the patent:
**09.11.83 Bulletin 83/45**

(84) Designated Contracting States:
**DE FR GB IT NL**

(56) References cited:
**FR - A - 1 194 369**
**FR - A - 2 245 469**
**FR - A - 2 284 428**
**FR - A - 2 322 708**
**GB - A - 960 570**
**US - A - 3 019 488**
**US - A - 4 117 068**

**PLASTICS ENGINEERING, vol. 35, no. 3, March
1979, pages 47—49 Greenwich, G. B. L. G.
WARD: "Thermoplastics stamping seeking
stamp of approval".**

(73) Proprietor: **TORAY INDUSTRIES, INC.**
**2, Nihonbashi-Muromachi 2-chome Chuo-ku
Tokyo 103 (JP)**

(72) Inventor: **Kitanaka, Minoru**
**No. 1-82, Ikegamidai, Midori-ku
Nagoya-shi, Aichi-ken (JP)**
Inventor: **Izumi, Zenji**
**No. 2-19, Matsuszono-cho, Mizuho-ku
Nagoya-shi, Aichi-ken (JP)**

(74) Representative: **Kador . Klunker . Schmitt-Nilson .
Hirsch
Corneliusstrasse 15
D-8000 München 5 (DE)**

Courier Press, Leamington Spa, England.

A method for producing thermoplastic resin molded articles

The present invention relates to a method for producing thermoplastic resin molded articles by pre-heating a sheet comprising a crystalline cross-linked thermoplastic resin to a temperature higher than the melting point of the cross-linked resin and below the decomposition temperature of the same.

Heretofore various methods for producing press-shaped plastics have been known. One method is the so-called SMC process which comprises impregnating a glass fiber mat with a monomer of a thermosetting resin and hardening the monomer by a polymerization reaction after subjecting the impregnated glass fiber mat to form a shaped article by press-shaping. Another known shaping method, noted superior to the SMC process in the productivity of the process, comprises heating a sheet or a film consisting of thermoplastic resin to a temperature higher than the melting point of the thermoplastic resin and feeding the treated sheet or film to a pair of molds and rapidly compressing the sheet or film. However, when a crystalline thermoplastic resin such as poly-$\varepsilon$-caprolactam, poly-hexamethylene-adipamide, polyethylene-terephthalate or polybutyleneterephthalate, is applied in the process as described above, the crystalline thermoplastic resin should normally be combined with a glass fiber mat because a preheated thermoplastic resin without a glass fiber mat begins to flow and cannot be manipulated. Furthermore, the molded article made from thermoplastic resin combined with glass fiber mat suffers a serious disadvantage in that the surface smoothness of the article is quite inferior due to the rising up of glass strands to the surface of the article. Several methods have been proposed to improve surface smoothness, for example, using fillers together with glass fiber mat or laminating a thermoplastic resinous sheet without a glass fiber mat. However, these methods have disadvantages in that they are not economically desirable because the process for preparing the composite sheet becomes complex, and neither of them contributes sufficiently to improve the surface smoothness.

On the other hand, the preheated thermoplastic resinous sheet without a glass fiber mat can be manipulated when the preheating temperature is lower than the melting point of the resin, and the surface smoothness of the molded article is improved, but this process suffers disadvantages in that the dimensional stability of the molded article is quite inferior and the mechanical equipment for molding is quite expensive because extremely high pressure is necessary. These methods are disclosed in United States Patent 3,621,092, and Japanese Patent Early Publication (Kokai) No. 52-40588.

While a method for providing an oriented sheet or film by compressing cross-linked crystalline thermoplastic resin under a pressure of 1 to 50 kg/cm$^3$ and cooling the same to room temperature while maintaining the pressure have been proposed in Japanese Patent Publication No. 52-6314, this method may provide a transparent and tough-shaped article, but the productivity of the process is not high and also the energy loss is not negligibly small.

GB—A—960 570 discloses a continuous process for preparing molded articles which is comprising blow or vacuum molding of a pre-heated cross-linked polyethylene resin.

Thus the object of the present invention is to provide a method for producing press-shaped articles having excellent surface smoothness, mechanical strength and dimensional stability free from the disadvantages as described above. Another object of the present invention is to provide a method having excellent productivity.

The present invention provides a method for producing thermoplastic resin molded articles by pre-heating a sheet comprising a crystalline cross-linked thermoplastic resin to a temperature higher than the melting point of the cross-linked resin and below the decomposition temperature of the same, which is characterized in that as crystalline cross-linked thermoplastic resin a polyamide or polyester resin is used, which is cross-linked to a degree of cross-linking of more than 5%, and that the pre-heated sheet is press molded between a pair of press molds maintained at a temperature below the melting point of the cross-linked crystalline thermoplastic polyamide or polyester resin. Preferably the pre-heated sheet is compressed under a pressure of 50 to 1000 kg/cm$^2$ by a pair of molds, the temperature of which is maintained at a temperature below the melting point of the cross-linked crystalline thermoplastic resin. In the present invention, the pre-heated thermoplastic resin maintains its shape without flow due to the cross-linking structure in the crystalline thermoplastic resin and can be readily transferred to the mold and the mechanical strength of the molded article is also improved remarkably. In addition, the surface of the molded article is excellently smooth because the molded article contains no glass fiber mat.

As crystalline thermoplastic resin, polyamides such as poly-$\varepsilon$-caprolactam, poly-$\omega$-laurolactam, polyhexamethylene-adipamide, polyhexamethylene-sebacamide, polyesters such as polyethylene-terephthalate, polybutyleneterephthalate, poly(ethylene-2,6-naphthalate), and copolymers of these polymers which have sufficient crystallinity can be used in the present invention, but the range of crystalline thermoplastic resin is not restricted by the examples. Any crystalline thermoplastic polyamide or polyester resin can be used. In the present invention, crystalline thermoplastic resin may contain heat resistant agents weathering stabilizer, dyes, pigments, antistatic agents, flame retardant agents, lubricants, mold release agent nucleating agents, fillers, short fibrous reinforcing agents, etc.

In the present invention it is essential that crystalline thermoplastic resin has a cross-linking

2

structure. The lowest degree of cross-linking which is required in the present invention varies depending on the kind of crystalline thermoplastic resin and on whether crystalline thermoplastic resin contains a short fibrous reinforcing agent or not. It must be at least 5%, preferably more than 30%. When the degree of cross-linking is lower than 5% the mechanical strength and facility is manipulating a pre-heated sheet are not sufficient. The higher the degree of cross-linking, the better when the crystallinity of the thermoplastic resin is not depressed by cross-linking. It is preferable that the depression of the melting point by cross-linking is less than 30°C. The melting point of cross-linked crystalline thermoplastic resin can be measured by thermal analysis such as differential scanning calorimetry abbreviated as DSC.

The degree of cross-linking is evaluated by measuring the weight fraction of insoluble component in cross-linked crystalline thermoplastic resin by extracting non-cross-linked linear polymer by solvent which can dissolve the resin. For example, orthochlorophenol for thermoplastic polyester or formic acid for polyamide, may be used.

Any cross-linking method, such as irradiation with a high energy beam, for example electron beam, $\gamma$-rays, x-rays, ultraviolet light etc., copolymerizing polyfunctional monomers, adding organic peroxide, for example dicumylperoxide etc. and the combination of these methods is used for preparing cross-linked crystalline thermoplastic resin.

In the present invention, not only the mechanical strength is extraordinarily improved by dispersing a short fibrous reinforcing agent homogeneously due to the duplicate effect of cross-linking and reinforcing, and also the surface smoothness of molded articles is quite excellent because of the homogeneous dispersion of the short fibrous reinforcing agent.

Short fibrous reinforcing agents are glass fiber, ceramic fiber, asbestos fiber, metallic fibers such as steel, aluminum, copper, whiskers such as boron, alumina, silica, silicon carbide, carbon fiber, aromatic polyamide fiber, synthetic fiber having a melting point higher than the matrix resin, regenerated fiber such as rayon, for example.

The length of the short fibrous reinforcing agent is preferably below 25 mm, especially below 15 mm. The content of short fibrous reinforcing agents is, for example, from 5 to 60%, preferably from 10 to 45% by volume. Below 5 volume % the reinforcing effect is not sufficient, over 60 volume % the reinforcing effect is saturated and, in addition, the moldability and the surface smoothness of the composite material are lowered. The short fibrous reinforcing agents may be treated with one or more of various types of sizing agents which are employed for improving the binding strength between resins and fibers. Various methods may be employed in the present invention for preparing the composite materials comprising cross-linked crystalline thermoplastic resins and the short fibrous reinforcing agent, such as cross-linking the composite compound after mixing the short fibrous reinforcing agent and the crystalline thermoplastic resin in the molten state by extrusion etc., polymerizing the crystalline thermoplastic resin in the presence of the short fibrous reinforcing agent, pressing the mixture of the crystalline thermoplastic powder and short fibrous reinforcing agent and cross-linking agent at a temperature higher than the melting point of the crystalline thermoplastic resin and so on.

The molding process employed in the present invention consists generally of four steps.

(1) the step in which the molding material is heated,

(2) the step in which the pre-heated material is transferred to the mold,

(3) the step in which the pre-heated material is formed and compressed by rapidly closing the mold and cooled for a prescribed time under pressure, and

(4) the step in which the mold is opened and the molded article is removed from the mold.

The molding process in the present invention is illustrated below, following the steps as mentioned above.

In the first step, an infrared oven, an air oven, an induction furnace or a combination of these ovens of furnace may be used as heating device. The pre-heating temperature of the molding material is higher than the melting point of the cross-linked crystalline thermoplastic resin and below the decomposition temperature of the same. The shape of the molding material is generally a sheet or a film having a thickness of 0.2 to 10 mm, preferably 0.5 to 5.0 mm. The molding material can be trimmed in accordance with the shape of the molded article.

In the second step, it is necessary that the pre-heated material should maintain its shape by itself in order to be manipulated and transferred into the mold. In the present invention the pre-heated material maintains its shape excellently by the cross-linking structure without a glass fiber mat. A mold such as a matched metal die may be used. The mold temperature is controlled between room temperature and a temperature below the melting point.

In the third step the pre-heated material is compressed between the molds and deformed three directionary and cooled. The time and pressure required for this step which varies depending on the thickness of the molding articles, kinds of cross-linked resins and the temperature of the mold is about 5 to 100 second and 50 to 1000 kg/cm², respectively. It is necessary that the molded article is sufficiently crystallized and solidified so as not to become deformed by the force produced when removing the article, such as due to the pressure of an ejection pin.

In the fourth step the molded article is removed from the mold. The mold may be coated with lubricant or mold release agent for facilitating the ejection of the article.

The molded article made from cross-linked crystalline thermoplastic resin in accordance with the present invention has excellent mechanical strength and surface smoothness and has a wide range of application.

The invention will hereinafter be further explained by way of examples.

Example 1

Poly-ε-caprolactam copolymerized with a salt which consists of 1 mol of trimesic acid and 1,5 mol of dodecamethylenediamine (abbreviated as 12 · TMS salt in the following description) is prepared by a conventional method. The weight fraction of 12 · TMS salt in the polymer is 4.86%. Before the cross-linking reaction occurs the polymer is extruded from the polymerizing apparatus and pelletized to granules having a dimension of about 1.5 mm $\emptyset \times 2.5$ mm. Monomer and oligomers are extracted from the pellet by boiling water for 24 hours and the pellet is dried for 48 hrs at 120°C in vacuo. Using the pellets, sheets having a thickness of 3.0 mm are prepared by the extrusion method. Then the sheets are further polymerized in the solid phase at 220°C for 72 hrs in vacuo. After this treatment the sheets have a degree of cross-linking of 80%. The cross-linked sheet is heated to 250°C and transferred to a mold having a temperature of 120°C. The mold has a dimension which is changed the depth and thickness of the ASTM-D 731—67 cup to 29 mm and 1.0 mm respectively. The facility in manipulating the pre-heated sheet is quite excellent. The mold is closed under a pressure of 150 kg/cm² for 60 sec. After this operation the mold is opened and the molded article is removed from the mold. The surface of the cup is excellently smooth.

By way of comparison, composite sheets comprising 30 weight % of a glass continuous strand mat and 70 weight of poly-ε-caprolactam without a cross-linking agent are prepared by impregnating poly-ε-caprolactam to the mat at 270°C. Using this composite sheet the cup is molded by the same method as mentioned in the example above, but the surface smoothness of this cup is quite inferior because of the rising up of the glass strands to the surface.

Using linear poly-ε-caprolactam sheet having no trimesic acid, the mold test is also attempted by the same method as mentioned in the example above, but it is impossible to manipulate the pre-heated sheet and transfer the sheet to the mold because of flowing and deformation of the prepared sheet.

Example 2

Poly-hexamethylene-adipamide copolymerized with 2.43 weight % 12 · TMS salt is prepared by a conventional method and the polymer is extruded and pelletized before the cross-linking reaction occurs. Sheets having a thickness of 2.0 mm are made from the pellets by the compression method. The sheets are further polymerized in the solid phase at 235°C for 48 hrs in vacuo. After this treatment the degree of cross-linking of the sheets is 85%.

This cross-linked sheet is heated to 280°C and the cup is molded by the same method as described in Example 1. The facility in manipulating the pre-heated sheet is quite excellent and the surface of the molded cup is excellently smooth.

Example 3

Poly-ε-caprolactam sheets having a thickness of 1.5 mm are prepared by the extrusion method. The sheets are irradiated by $\gamma$-rays from a ⁶⁰Co source in an acetylene atmosphere for 200 hrs at room temperature. The dose rate of $\gamma$-rays is 0.25 M rad/hr. The degree of cross-linking of the irradiated sheets is 65%. Using this sheet the cup is molded by the same method as in Example 1. The pre-heated sheet can be easily manipulated and readily transferred to the mold and the surface of the molded article is excellently smooth.

Example 4

300 g of poly-ε-caprolactam powder having a particle size of below 100 mesh and 12 g of diepoxide (Shell Chem. "Epikote" 819) are mixed in a Henschel mixer at room temperature. The mixture is fed to a mold which is placed in the hydraulic hot press, the temperature being set at 260°C. Then the mixture is compressed to form a plate having a thickness of 3.0 mm. After the mold is maintained for 10 minutes in that state, the mold is cooled by a hydraulic cold press in which water at room temperature is circulating. After this operation the sheet has a degree of cross-linking of 65%. Using this sheet the cup is molded by the same method as in Example 1. The pre-heated sheet can be easily manipulated and readily transferred to the mold and the surface of the molded article is excellently smooth.

Example 5

Poly-ε-caprolactam pellets copolymerized with 0 to 7.29 weight % 12 · TMS salt are prepared by the method as described in Example 1. Using the pellets, sheets having a thickness of 2.5 mm are molded by the compression method. The sheets are further polymerized in the solid state at 220°C for 72 hrs in vacuo. After this treatment each sheet has the degree of cross-linking as illustrated in Table 1. From these sheets the cups are molded by the same methods as noted in Example 1 and the melting temperature, moldability of cross-linked sheets, mechanical strength, surface smoothness of molded

4

articles are evaluated and shown in Table 1. In the case when the sheet is not cross-linked it is impossible to mold the cup. In the case when the degree of cross-linking is above 30%, the moldability, mechanical strength and surface smoothness of the molded cup are superior.

TABLE 1

| 12 · TMS salt (wt %) | Degree of cross-linking a) % | Melting point b) (°C) | Moldability | Tensile strength c) (kg/cm$^2$) | Surface smoothness d) |
|---|---|---|---|---|---|
| 0 | 0 | 220 | impossible to transfer the pre-heated sheet to the mold | — | — |
| 1.46 | 10 | 220 | extraordinary deformation of pre-heated sheet | 850 | creases are partly formed |
| 1.94 | 32 | 218 | excellent | 900 | excellently smooth |
| 2.43 | 55 | 215 | " | 950 | " |
| 4.37 | 90 | 213 | " | 1200 | " |
| 7.29 | 94 | 208 | " | 1700 | " |

a) weight fraction of insoluble component of cross-linked sheet after extraction with 88% aqueous solution of formic acid.

b) endothermic peak temperature measured at heating rate of 10°C/minute by DSC-1B (Perkin Elmer).

c) evaluated by the specimen in accordance with ASTM D 1822 cut from the bottom of the molded cup.

d) evaluated by the human eye.

Example 6

Polyethyleneterephthalate containing 2.0 weight % of trimethyl trimellitate is polymerized by the conventional method and before the cross-linking reaction occurs the polymer is extruded and pelletized. 2.0 mm thick sheets are prepared from the pellets by the compression method. The sheets are further polymerized in the solid phase at 225°C for 98 hrs in vacuo. After this treatment the sheets have a degree of cross-linking of 60% and a melting point of 254°C. This cross-linked sheet is heated to 275°C and transferred to the same mold as in Example 1 having a temperature of 140°C. The facility in manipulating the pre-heated sheet is excellent. Immediately after the pre-heated sheet is put into the mold, the mold is closed under a pressure of 150 kg/cm$^2$ for 60 sec. Then the mold is opened and the molded cup is removed from the mold. The surface of the article thus molded is excellently smooth.

By way of comparison, composite sheets comprising 30 weight % of a glass continuous strand mat and 70 weight % of polyethyleneterephthalate having no cross-linking agent are prepared by impregnating the polyethyleneterephthalate into the glass mat at 280°C. Using this composite sheet the cup-shaped article is molded by the same method as described above in this example, but the surface smoothness of this molded article is quite inferior because glass fiber strands come up to the surface.

Using polyethyleneterephthalate sheets containing no trimethyltrimellitate the mold test is also attempted by the same method as mentioned above in this example, but it is impossible to manipulate the pre-heated sheet and to transfer the pre-heated sheet to the mold because of flowing and deformation of the pre-heated sheet.

Example 7

Polybutyleneterephthalate copolymerized with 1.85 wt.% trimethyltrimellitate is prepared by the conventional method and the polymer is extruded and pelletized before the cross-linking reaction occurs. 3.0 mm thick sheets are compression molded from the pellet. The sheets are further polymerized in the solid state at 205°C for 98 hrs in vacuo. After this treatment the sheets have a degree of cross-linking of 68% and a melting point of 222°C. This cross-linked sheet is heated to 250°C and a cup shaped article is molded by the same method as in Example 6, except that the mold temperature is set at 40°C. The facility in manipulating the pre-heated sheet is excellent and the surface of the thus molded cup is excellently smooth.

By way of comparison, composite sheets comprising 30 weight % of a glass chopped strand mat and 70 weight % of polybutyleneterephthalate having no cross-linking agent are prepared by

**0013754**

impregnating the polybutyleneterephthalate into the glass mat at 260°C. Using this composite sheet the cup is molded by the same method as noted above in this example, but the surface smoothness of the molded article is quite inferior because glass strands rise up to the surface of the cup.

Example 8

Polybutyleneterephthalate copolymerized with 0 to 2.0 wt.% of pyromellitic acid anhydride are prepared by the conventional method and the polymer is extruded and pelletized before the cross-linking reaction occurs. Using the pellet, 1.5 mm thick sheets are compression molded and further polymerized in the solid phase at $205\pm5°C$ for 24 hrs in vacuo. After this treatment each sheet has the degree of cross-linking as illustrated in Table 2. From these sheets the cups are molded by the same method as in Example 7, and the melting temperature and moldability of cross-linked sheets, the mechanical strength and surface smoothness of the molded cups are evaluated and shown in Table 2. From Table 2, it is clear that the moldability, mechanical strength and surface smoothness of the molded cup is excellent when the degree of cross-linking is more than 30%.

TABLE 2

| Pyromellitic acid anhydride (wt. %) | Degree of cross-linking a) % | Melting point b) (°C) | Moldability | Tensile strength c) (kg/cm²) | Surface smoothness d) |
|---|---|---|---|---|---|
| 0 | 0 | 224 | impossible to transfer the pre-heated sheet to the mold | — | — |
| 0.5 | 8 | 223 | extraordinary deformation of pre-heated sheet | 480 | creases are partly formed |
| 1.0 | 37 | 216 | excellent | 570 | smooth |
| 1.5 | 85 | 207 | " | 715 | excellently smooth |
| 2.0 | 96 | 203 | " | 820 | " |

a) weight fraction of insoluble component of cross-linked sheet after extraction with orthochlorophenol.

b) endothermic peak temperature measured at heating rate of 10°C/min by DSC-1B (Perkin Elmer).

c) evaluated by the specimen in accordance with ASTM D 1822 cut from the bottom of the molded cup.

d) evaluated by the human eye.

Example 9

Poly-$\varepsilon$-caprolactam pellets copolymerized with 0 to 7.29 weight % of 12·TMS salt are prepared by the same method as in Example 1. A mixture of the pellets and a 6 mm long glass chopped strand is fed to the hopper of an extruder and 3.0 mm thick sheets are extruded. The glass fiber content in the sheets is 16% in volume. The sheets are further polymerized in the solid phase at 215°C for 72 hrs in vacuo. After this treatment each sheet has the degree of cross-linking as illustrated in Table 3. Using this cross-linked sheet a cup having a bottom radius of 70 mm$^\phi$, height of 30 mm and thickness of 1.0 mm is molded. The molding conditions are as follows:

pre-heating temperature of the sheet; 250°C,
mold temperature; 120°C,
compression pressure; 180 to 230 kg/cm²,
compression time; 45 to 60 sec.

The melting temperature and moldability of cross-linked sheets, the mechanical strength and surface smoothness of molded cups are evaluated and shown in Table 3. In case where the degree of cross-linking is over 5%, moldability, surface smoothness and mechanical strength are improved remarkably.

6

TABLE 3

| 12·TMS salt (wt. %) | Glass fiber (vol. %) | Degree of crosslinking a) (%) | Melting point b) (°C) | Moldability | Tensile strength c) (kg/cm²) | Surface smoothness d) |
|---|---|---|---|---|---|---|
| 0 | 16 | 0 | 225 | extraordinary deformation of pre-heated sheet | 1200 | creases are formed |
| 0.73 | 16 | 0 | 226 | " | 1200 | " |
| 1.46 | 16 | 3 | 223 | " | 1200 | " |
| 1.94 | 16 | 5 | 220 | good | 1250 | smooth |
| 2.43 | 16 | 40 | 215 | excellent | 1300 | excellently smooth |
| 2.92 | 16 | 57 | 213 | " | 1450 | " |
| 3.64 | 16 | 68 | 213 | " | 1600 | " |
| 4.86 | 16 | 90 | 210 | " | 1650 | " |
| 7.29 | 16 | 95 | 207 | " | 2150 | " |

a), b), c), d): evaluated by the same method as in Example 5.

Example 10

Poly-ε-caprolactam pellets copolymerized with 2,92 wt.% of 12·TMS salt are prepared by the same method as in Example 1. A mixture of these pellets and a 7 mm long carbon chopper strand is fed to the hopper of an extruder and composite sheets having a thickness of 2.8 mm are extruded. The content sheets having a thickness of 2.8 mm are extruded. The content of carbon fiber is changed as illustrated in Table 4. The sheets are further polymerized in the solid phase at 215°C for 48 hrs in vacuo. After this treatment the sheets have a degree of cross-linking of 53% and a melting point of 213°C. Using these sheets the same cups as in Example 9 are molded and the moldability, mechanical strength and surface smoothness are evaluated and shown in Table 4. The reinforcing effect is not recognized when the carbon fiber content is under 5 volume % and the surface smoothness is inferior when the carbon fiber content is over 65 volume %. Molded articles have excellent mechanical strength, moldability and surface smoothness when the carbon content is between 5 and 60 volume %.

TABLE 4

| Carbon fiber content (vol. %) | Degree of cross-linking a) (%) | Melting point b) (°C) | Moldability | Tensile strength c) (kg/cm²) | Surface smoothness d) |
|---|---|---|---|---|---|
| 0 | 53 | 213 | excellent | 1100 | excellent |
| 3 | " | " | " | 1100 | " |
| 5 | " | " | " | 1150 | " |
| 10 | " | " | " | 1350 | " |
| 20 | " | " | " | 2000 | " |
| 30 | " | " | " | 2200 | " |
| 45 | " | " | good | 2300 | smooth |
| 60 | " | " | " | 2500 | " |
| 65 | " | " | bad | 2500 | bad |

a), b), c), d): evaluated by the same method as Example 5.

Example 11

A homogeneous mixture of poly-ε-caprolactam powder, 3 mm of long glass chopper fibers and diepoxide (Shell Chem. "Epikate" 819) is prepared by mixing in a Henshel mixer until the glass chopper fibers are completely disaggregated. The mixing ratio of poly-ε-caprolactam, glass fiber and diepoxide is 67 weight %, 30 weight % and 3 weight %, respectively. Using this mixture 3.0 mm thick sheets are prepared and a cup is molded by the same method as in Example 4. The sheet has a degree of cross-linking of 67%. The prepared sheet can be easily manipulated and readily transferred to the mold and the surface of the molded article is excellently smooth.

**0013754**

## Claims

1. A method for producing thermoplastic resin molded articles by pre-heating a sheet comprising a crystalline cross-linked thermoplastic resin to a temperature higher than the melting point of the cross-linked resin and below the decomposition temperature of the same, characterized in that as crystalline cross-linked thermoplastic resin a polyamide or polyester resin is used, which is cross-linked to a degree of cross-linking of more than 5%, and that the pre-heated sheet is press molded between a pair of press molds maintained at a temperature below the melting point of the cross-linked crystalline thermoplastic polyamide or polyester resin.

2. The method of claim 1, wherein the polyamide resin is poly-$\varepsilon$-caprolactam.

3. The method according to claims 1 or 2, wherein the crystalline thermoplastic resin is cross-linked to a degree of cross-linking of more than 30%.

4. The method according to claims 1 to 3, wherein the sheet has a thickness of 0.2 to 10 mm.

5. The method according to claims 1 to 4, wherein the cross-linked crystalline thermoplastic polyamide or polyester resin contains 5 to 60 vol % of glass-fibers.

6. The method according to claims 1 to 5, wherein the press-molding of the pre-heated sheet is carried out under a pressure of 50 to 1000 kg/cm².

## Patentansprüche

1. Verfahren zur Herstellung von geformten Gegenständen aus einem thermoplastischen Harz unter Vorerhitzen eines Blattes, das ein kristallines vernetztes thermoplastisches Harz enthält, auf eine Temperatur über dem Schmelzpunkt des vernetzten Harzes und unter dessen Zersetzungspunkt, dadurch gekennzeichnet daß man als kristallines vernetztes thermoplastisches Harz einpPolyamid- oder Polyester-Harz verwendet, das zu einem Vernetzungsgrad von mehr als 5% vernetzt ist, und daß das vorerhitzte Blatt zwischen einem Paar von Formpressen, das auf einer Temperatur unterhalb des Schmelzpunktes des vernetzten kristallinen thermoplastischen Polyamid- oder Polyester-Harzes gehalten wird, formgepreßt wird.

2. Verfahren nach Anspruch 1, bei dem das Polyamide-Harz Poly-$\varepsilon$-caprolactam ist.

3. Verfahren nach den Ansprüchen 1 oder 2, bei dem das kristalline thermoplastische Harz auf einen Vernetzungsgrad von mehr als 30% vernetzt ist.

4. Verfahren nach den Ansprüchen 1 bis 3, bei dem das Blatt eine Dicke von 0,2 bis 10 mm aufweist.

5. Verfahren nach den Ansprüchen 1 bis 4, bei dem das vernetzte kristalline thermoplastische Polyamid- oder Polyester-Harz 5 bis 60 Vol.-% Glasfasern enthält.

6. Verfahren nach den Ansprüchen 1 bis 5, bei dem das Formpressen des vorerhitzten Blattes bei einem Druck von 50 bis 1000 kg/cm² durchgeführt wird.

## Revendications

1. Procédé de fabrication d'articles moulés en résine thermoplastique par pré-chauffage d'une feuille comprenant une résine thermoplastique cristalline réticulée à une température supérieure au point de fusion de la résine réticulée et inférieure à la température de décomposition de cette résine, caractérisé en ce que comme résine thermoplastique cristalline réticulée on utilise une résine de polyamide ou de polyester, qui est réticulée à une degré supérieur à 5%, et en ce qu'on comprime la feuille pré-chauffée entre une pair de moules de presse maintenus à une température inférieure au point de fusion de la résine de polyamide ou de polyester thermoplastique cristalline réticulée.

2. Procédé selon la revendication 1, caractérisé en ce que la résine de polyamide est le poly-$\varepsilon$-caprolactame.

3. Procédé selon les revendications 1 ou 2, caractérisé en ce que la résine thermoplastique cristalline est réticulée à un degré de réticulation supérieur à 30%.

4. Procédé selon les revendications 1 à 3, caractérisé en ce que la feuille a une épaisseur de 0,2 à 10 mm.

5. Procédé selon les revendications 1 à 4, caractérisé en ce que la résine de polyamide ou de polyester thermoplastique cristalline réticulée contient 5 à 60% en volume de fibres de verre.

6. Procédé selon les revendications 1 à 5, caractérisé en ce que le moulage à la presse de la fueille pré-chauffée est exécuté sous une pression de 50 à 1000 kg/cm².